# EUROPEAN PATENT SPECIFICATION

(11) **EP 0 435 346 B1**
(45) Date of publication and mention of the grant of the patent: **03.05.1995**
(21) Application number: 90125768.3
(22) Date of filing: 28.12.1990
(51) Int. Cl.: C08K 5/49, C08L 67/02

(54) **Elastomeric thermoplastic copolyetherester compositions having improved thermo-oxidation resistance**
Elastomerische thermoplastische Copolyetherester-Zusammensetzungen mit verbesserter Widerstandsfähigkeit gegen Thermooxidation
Compositions de copolyétherester élastomérique thermoplastique à résistance à l'oxydation thermique améliorée

(30) Priority: 29.12.1989 IT 2287889
(43) Date of publication of application: 03.07.1991
(73) Proprietor: ENICHEM S.p.A., 20124 Milano (IT)
(72) Inventor: Chiolle, Antonio, Dr., I-44100 Ferrara (IT); Maltoni, Gian Paolo, I-44100 Ferrara (IT); Stella, Romolo, I-45030 S. Maria Maddalena, Rovigo (IT)
(74) Representative: Barz, Peter, Dr.

(56) References cited:
- EP-A- 0 144 174
- WPIL, FILE SUPPLIER, Derwent Publications Ltd.,&& JP-A-1029455

## Description

The present invention relates to elastomeric thermoplastic copolyether-esters endowed with improved thermo-oxidative resistance.

More particularly, the present invention relates to elastomeric thermoplastic copolyether-ester compositions having excellent rheological and mechanical properties and improved resistance to thermo-oxidation, particularly suitable for being transformed into shaped articles by extrusion, blow-molding or injection molding.

The elastomeric thermoplastic copolyether-esters are materials which are distinguished in the field of rubbers by their good physical and mechanical properties, such as toughness, fatigue resistance, abrasion resistance, impact resistance and the like, as well as by their oil and gasoline resistance.

Although their above properties are significantly better than those of copolyesters, the elastomeric thermoplastic copolyether-esters exhibit a poor resistance to thermo-oxidation.

It is known, in fact, that the elastomeric copolyether-esters tend to degrade when subjected to temperatures higher than 150°C for extended periods of time. This drawback drastically reduces the number of fields in which the copolyether-esters may be used.

In order to overcome this drawback, it is known to add to the copolyether-esters an antioxidant which prevents or inhibits the thermal degradation thereof.

Many antioxidants have been proposed to this end, but none of them solves the above problem thoroughly and without undesired side effects.

Thus, for example, it is known from US-A-3,193,522 and 3,193, 524 to add polycarbodiimides for improving the resistance of polyesters to thermooxidation and light.

The effectiveness of these compounds, however, is somewhat limited, since the low molecular weight polycarbodiimides are readily extracted by solvents or mineral oils, have a tendency to migrate to the surface and are ineffective at high temperatures due to their tendency to undergo polymerization, thereby destroying the reactivity of the carbodiimide group and thus the stabilizing action thereof.

Other carbodiimides such as, for example, those containing other functional groups (such as hydroxyl groups) have been proposed as stabilizers; however, also these compounds tend to react with themselves and often they loose activity during prolonged storage.

To overcome all the above drawbacks, it has been proposed to use, as stabilizers for polyesters, polycarbodiimides having a molecular weight of at least 500 and having at least 3 carbodiimide groups in the molecule (see US-A-3,193,522).

However, the thermal stability of the thus obtained polyester compositions again is not completely satisfactory for certain applications where a high thermo-oxidative stability is required.

US-A-3,896,078 proposes to improve the resistance to thermo-oxidation of copolyether-esters by incorporating into the polymer an effective amount of an amide linkage containing material which on hydrolysis yields primary amino groups and carboxylic acid groups, together with an antioxidant of the arylamine or hindered phenol type. A typical example of an amide linkage containing compound is 1,6-bis[3-(3,5-di-tert.-butyl-4-hydroxyphenyl)propionamide] hexane, commerically known as IRGANOX 1098®.

The elastomeric thermoplastic copolyether-esters stabilized with the above compounds exhibit a poor stability toward thermo-oxidation with time. In fact, they tend to take on a yellow colour after some days of treatment in an oven at 150°C in air. Furthermore, the physico-mechanical properties of the stabilized products decay rapidly after this treatment. The same drawbacks have also been found when using other stabilizers such as hindered phenols, amide group containing hindered phenols, phosphites etc.

EP-A-144 174 discloses compositions of segmented thermoplastic copolyester elastomers containing small amounts of a guanidine stabilizer and preferably also small amounts of phosphorus stabilizer and diphenylamine derivative. Said phosphorus stabilizer may, i.a., be a pentaerythritol phosphite.

It has now been found that the resistance to thermo-oxidative degradation of elastomeric thermoplastic copolyether-esters may significantly be enhanced by incorporating into the polymers an effective amount of a synergistic mixture of a certain organo-phosphite and a pentaerythritol phosphite.

The amount of the stabilizing mixture to be added generally ranges from 0.01 to 10% by weight with respect to the elastomeric copolyester, and preferably from 0.2 to 5% by weight.

The weight ratio of organo-phosphite to pentaerythritol phosphite in the synergistic mixture employed in the present invention can be varied within a broad range, although ratios of from 1:2 to 2:1 are preferred; an organo-phosphite/pentaerythritol phosphite weight ratio of about 1:1.5 yields particularly advantageous results.

The organo-phosphite used in the stabilizing mixture of the present invention has the general formula (I): 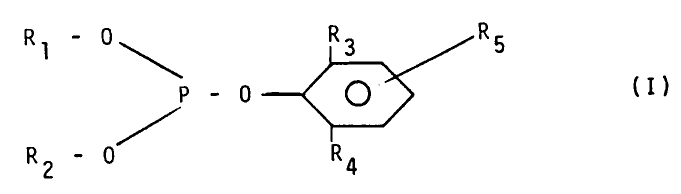
wherein:
R₁ and R₂, the same or different from each other, represent a C₁-C₆ alkyl group (e.g. methyl, ethyl or propyl), a C₃-C₆ cyclo-alkyl group (e.g. cyclopentyl or cyclohexyl), a C₆-C₁₂ aryl group (e.g. phenyl or naphthyl), an alkyl-aryl group or an aryl-alkyl group containing from 7 to 15 carbon atoms (e.g. tolyl or benzyl); said groups being optionally substituted; and
R₃, R₄ and R₅, the same or different from each other, represent hydrogen, a C₁-C₆ alkyl group, a C₃-C₆ cyclo-alkyl group, an alkyl-aryl group or an aryl-alkyl group containing from 7 to 16 carbon atoms (for specific examples of said groups see above), said groups being substituted or unsubstituted, with the proviso that at least one of R₃ and R₄ is a three-dimensionally hindering substituent such as an isopropyl or, preferably, a tertiary butyl group.

The organo phosphites wherein each of R₁ and R₂ is a group of formula (II): 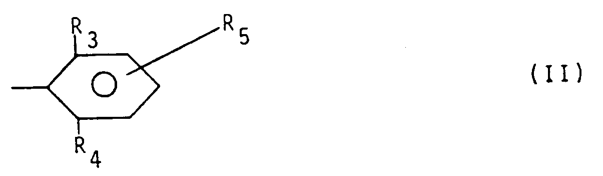
wherein R₃, R₄ and R₅ have the meanings given above are preferred.

Examples of substituents which may be present on the above groups R₁ to R₅ are halogen atoms (e.g. F, Cl or Br, particularly Cl), C₁-C₆-alkoxy (e.g. methoxy and ethoxy), C₂-C₆ acyl (e.g. acetyl) and C₂-C₆ acyloxy (e.g. acetoxy).

Typical examples of compounds encompassed by general formula (I) which may be used as co-stabilizers in the synergistic mixture employed in the present invention, are:
di-n-butyl(2-t-butyl-p-cresyl)phosphite;
di-n-hexyl(2-t-butyl-m-cresyl)phosphite,
di-n-hexyl(2-t-butyl-p-cresyl)phosphite,
di-n-octyl(2-t-butyl-p-cresyl)phosphite,
di-n-butyl-(2,4-di-t-butyl-phenyl)phosphite,
di-n-butyl(2,6 -di-t-butyl-p-cresyl)phosphite,
di-phenyl(2-t-butyl-p-cresyl)phosphite,
tri-(2,4-di-t-butyl phenyl)phosphite,
tri-(2-t-butyl-p-cresyl)phosphite,
tri-(2-t-butyl-m-cresyl)phosphite,
tri-(2,6-di-t-butyl-phenyl)phosphite,
tri-(6-t-butyl-p-cresyl)phosphite.

These compounds are already known in the literature and proposed in US-A-3,558,554 for the stabilization of polyolefins.

Particularly, tri-(2,4-di-t-butyl-phenyl)phosphite is known on the market as ANTIOXYDANT RO 103® (Società Francaise D'Organo-Synthèse), IRGAFOX 168® (CIBA-GEIGY) and ALKANOX 240® (Enichem Synthesis).

The pentaerythritol phosphite used in the synergistic mixture of the present invention preferably has the general formula (III): 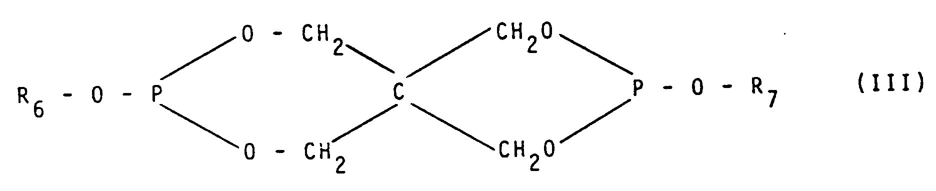
wherein R₆ and R₇, the same or different from each other, are selected from C₁-C₂₀ (preferably C₁-C₁₀-)alkyl, aryl, aryloxyethyl, alkoxyethyl, aryloxyethoxyethyl, alkoxyethoxyethyl and alkoxy-polyethoxyethyl, each of these radicals being optionally substituted by one or more halogen atoms such as Cl and F.

Preferred aryl and aryloxy groups mentioned above are those having 6 to 15 carbon atoms (e.g. phenyl, phenoxy, tolyl and tolyloxy) while preferred alkoxy groups mentioned above are those having 1 to 6, particularly 1 to 4 carbon atoms (e.g. methoxy and ethoxy).

Examples of compounds having general formula (III) are:
di-phenyl-pentaerythritol-diphosphite,
di-decyl-pentaerythritol-diphosphite,
di-iso-decyl-pentaerythritol-diphosphite,
di-stearyl-pentaerythritol-diphosphite,
phenyl-iso-decyl-pentaerythritol-diphosphite,
di-lauryl-pentaerythritol-diphosphite,
di(methoxy-ethyl)-pentaerythritol-diphosphite,
di-toluyl-pentaerythritol-diphosphite,
methoxyethyl-iso-decyl-pentaerythritol-diphosphite,
di-(ethoxy-ethyl)-pentaerythritol-diphosphite,
di-(butoxy-ethyl)-pentaerythritol-diphosphite,
methoxyethyl-butoxyethyl-pentaerythritol-diphosphite,
di-(methoxy-ethoxy-ethyl)-pentaerythritol-diphosphite,
di-(butoxy-ethoxy-ethyl)-pentaerythritol-diphosphite,
di-(methoxy-polyethoxyethyl)-pentaerythritol-diphosphite,the polyethoxyethyl group of which has an average molecular weight of about 550.

All of the above compounds and their preparation are well known from literature and disclosed, e.g.,in US-A-2,847,443; 3,047,608 and 3,205,269.

A particularly preferred compound is di-stearyl-pentaerythritol-di-phosphite or 3,9-di(octadecyloxy)2,4,8,10-tetraoxa-3,9-diphosphaspiro[5,5]-undecane, commercially known as WESTON 618® (WESTON CHEMICAL INC.) and ULTRANOX 624® (BORG WARNER CHEMICALS).

Any elastomeric thermoplastic copolyether-ester containing ester bonds 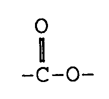
and ether bonds - C - O - C may be stabilized by the synergistic mixtures employed according to the present invention. It is, however, preferred that said polyether-esters exhibit a softening or melting temperature lower than about 250°C, which is the temperature at which the stabilizing system usually is not effective any more.

The elastomeric thermoplastic copolyether-esters having a segmented structure are particularly preferred. These elastomeric thermoplastic copolyether-esters consist of a multiplicity of repeating long-chain ester units and of repeating short-chain ester units connected to each other in head-to-tail fashion through linkages of the ester type. Said long-chain ester units are preferably represented by general formula (IV): 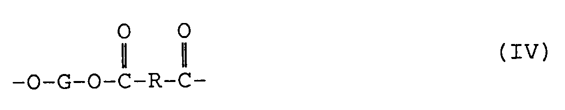
and said short-chain units are preferably represented by general formula (V): 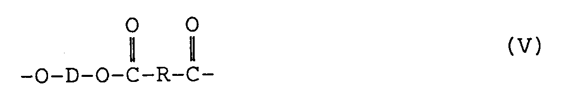
wherein:
- G: is a divalent group remaining after the removal of the terminal hydroxy groups from a poly-(alkylene oxide) glycol having an average molecular weight of from about 250 to 6,000 and a carbon/oxygen ratio of about 1.8 to 4.3;
- R: is a divalent group remaining after the removal of the carboxy groups from a dicarboxylic acid having a molecular weight lower than about 300; and
- D: is a divalent radical remaining after the removal of the hydroxy groups from a diol having a molecular weight lower than about 250.

In said copolyesters the short-chain ester units of general formula (V) are preferably present in an amount of about 15 to 95% by weight, preferably 33 to 86% by weight, with respect to the weight of the copolyester, the remaining part being composed of long-chain ester units of general formula (IV).

Said elastomeric copolyether-esters are well known in the literature and described, for example, in US-A-3,023,192 and 3,651,015; IT-B-947589, 963304, 973059 and IT-A-21212 filed on July 4,1988 in the name of the applicant.

The expression "long-chain ester units" refers to the reaction product of a poly(alkylene oxide) glycol with a dicarboxylic acid, resulting in ester units represented by the above formula (IV).

As poly(alkylene-oxide) glycols there may be used, for example, those which contain from 2 to 10 carbon atoms in the alkylene group, such as poly-(1,2- and 1,3-propylene-oxide)-glycol; poly-(tetramethylene-oxide)-glycol; poly(pentamethylene-oxide)-glycol; poly-(hexamethylene-oxide)-glycol; poly-(heptamethylene-oxide)-glycol; poly-(octamethylene-oxide)-glycol; poly-(nonamethylene-oxide)-glycol; poly-(decamethylene-oxide)-glycol; and poly-(1,2-butylene-oxide)-glycol; OH terminated polybutene-1-polybutadiene; random copolymers or block copolymers of ethylene-oxide and 1,2-propylene-oxide; and the like.

Particularly preferred is poly-(tetramethylene-oxide)-glycol having a very narrow average distribution of the molecular weights, such as, for example, a Mw/Mn ratio lower than 2, which generally results in an improved resistance to fluids such as oils, gasoline, water, fats etc.

The expression "short-chain ester units" relates to the reaction product of a diol having a low molecular weight (lower than about 250) with a dicarboxylic acid in order to form ester units represented by the above formula (V).

Among the diols having a low molecular weight which result in short-chain ester units, non-cyclic, alicyclic and aromatic di-hydroxy compounds are included.

Diols of from 2 to 15 carbon atoms such as ethylene-glycol, propylene-glycol, isobutylene-glycol, tetramethylene-glycol, pentamethylene-glycol, 2,2-dimethyl-trimethylene-glycol, hexamethylene-glycol and decamethylene-glycol, di-hydroxycyclohexane, cyclohexane-dimethanol, resorcinol, hydroquinone, 1,5-di-hydroxy-naphthalene, etc. are preferred.

Particularly preferred are aliphatic diols containing from 2 to 8 carbon atoms.

Examples of di-hydroxy-aromatic compounds which may be used are bisphenols, such as bis-(p-hydroxy)-diphenyl, bis-(p-hydroxyphenyl)-methane, and bis-(p-hydroxyphenyl)-propane (e.g. bisphenol A).

The term "low-molecular-weight diols" as used herein should hence be understood as also including all of the derivatives suitable for forming esters, although the molecular weight requirement refers exclusively to the basic diol, and not to the derivatives thereof.

However, 1,4-butane-diol is particularly preferred for the purpose of the present invention.

Preferred dicarboxylic acids which are reacted with the above poly(alkylene oxide) glycols and with the low molecular weight diols to yield the copolyether-esters of the present invention are aliphatic, cycloaliphatic and/or aromatic dicarboxylic acids having a low molecular weight, i.e., having a molecular weight of preferably less than about 300.

The term "dicarboxylic acids" also includes derivatives of dicarboxylic acids which show a behaviour similar to that of dicarboxylic acids in the reaction with glycols and diols to form copolyether-ester polymers. These equivalent compounds include esters and ester-forming derivatives such as, e.g., acid halides and anhydrides. The molecular weight requirement, however, relates exclusively to the acid, and not to its corresponding esters or other ester-forming derivatives.

Therefore, in the preferred embodiment of the present invention the "dicarboxylic acid" covers also an ester of a dicarboxylic acid which ester has a molecular weight higher than 300, or any other dicarboxylic acid derivative having a molecular weight greater than 300, provided that the corresponding acid has a molecular weight below about 300. The dicarboxylic acids may contain any substituent groups or any combination of substituent groups which do not significantly interfere with the formation of the copolyester polymer and with the use thereof in the end products according to the present invention.

Within the context of the present invention, by "aliphatic dicarboxylic acids" those carboxylic acids are meant which contain two carboxylic groups, each attached to a saturated carbon atom. If the carbon atom to which the carboxylic group is attached is a saturated one and is part of a ring, the acid is cycloaliphatic. Generally, aliphatic acids or cycloaliphatic acids containing a conjugated unsaturation cannot be used, in that they are liable to homopolymerize. However, some unsaturated acids such as, e.g., maleic acid and the dimer or trimer of oleic acid can be used.

The term "aromatic dicarboxylic acids" as used herein refers to dicarboxylic acids having two carboxylic groups, each carboxylic group being attached to a carbon atom in an isolated or fused benzene ring. It is not necessary that both carboxylic groups be attached to the same aromatic ring, and, where more than one ring is present, said rings may be linked through divalent aliphatic or aromatic radicals or through divalent radicals such as, e.g., -O- or -SO₂-, or even by a carbon-carbon single bond.

Examples of aliphatic and cycloaliphatic dicarboxylic acids which can be used in the present invention are sebacic acid, 1,3-cyclohexene-dicarboxylic acid, 1,4-cyclohexane-dicarboxylic acid, adipic acid, glutaric acid, succinic acid, oxalic acid, azelaic acid, diethyl-malonic acid, allyl-malonic acid, 4-cyclohexane-1,2-dicarboxylic acid, 2-ethylsuberic acid, 2,2,3,3-tetramethyl-succinic acid, cyclopentane-dicarboxylic acid, decahydro-1,5-naphthalene-dicarboxylic acid, 4,4'-dicyclohexyl-dicarboxylic acid, decahydro-2,6-naphthalene-dicarboxylic acid, 4,4'-methylene-bis-(cyclohexyl)-carboxylic acid, 3,4-furan-dicarboxylic acid, 1,1-cyclobutane-dicarboxylic acid, etc.

Cyclohexane-dicarboxylic acid and adipic acid are preferred dicarboxylic acids.

Examples or aromatic dicarboxylic acids which can be used comprise phthalic acid, isophthalic acid, terephthalic acid, dibenzoic acid, dicarboxylic compounds substituted with two benzene rings, such as, e.g., bis(para-carboxy-phenyl)-methane, para-oxy-(para-carboxy-phenyl)-benzoic acid, ethylene-bis-(para-oxybenzoic acid), 1,5-naphthalene-dicarboxylic acid, 2,6-naphthalene-dicarboxylic acid, 2,7-naphthalene-dicarboxylic acid, phenanthrene-dicarboxylic acid, anthracene-dicarboxylic acid, 4,4'-sulfonyl-dibenzoic acid, thiofurazane-3,4-dicarboxylic acid, as well as their C₁-C₁₂-alkyl esters and derivatives resulting from substitution on the ring, such as, e.g., halo, alkoxy, and aryl derivatives.

Aromatic acids containing a hydroxy group, such as, e.g., para-(β-hydroxy-ethoxy)benzoic acid, may also be used, provided that an aromatic dicarboxylic acid is also present.

The aromatic dicarboxylic acids constitute a preferred class for preparing the copolyether-ester polymers of the compositions of the present invention.

Among the aromatic acids, those with from 8 to 16 carbon atoms are preferred; particularly preferred are phenylene-dicarboxylic acids, i.e., phthalic acid, isophthalic acid and terephthalic acid. In particular, either terephthalic acid alone or a mixture of terephthalic acid and isophthalic acid are preferred.

At least about 70% by mol of the dicarboxylic acid included in the polymer are preferably composed of terephthalic acid, i.e., about 70% of the "R" groups in formulae (IV) and (V) above are preferably 1,4-phenylene radicals.

The carboxylic acids or their derivatives and the polymeric glycols are included in the final products in the same molar proportions in which they are contained in the reaction mixtures. The actually included amount of low-molecular weight diol corresponds to the difference between the mols of diacid and the mols of polymeric glycol contained in the reaction mixture.

The most preferred copolyesters of the present invention are those prepared form terephthalic acid (TPA), 1,4-butanediol (BD), and poly-tetramethyleneglycol (PTMG) having an average molecular weight of from about 250 to about 4,500 and, optionally, isophthalic acid (IPA) in an amount not higher than about 5% by weight with respect to the total amount of the two acids.

The polymers of the compositions of the present invention may suitably be prepared by means of a normal transesterification reaction. A preferred process comprises heating, at 150 - 230°C, the ester of the dicarboxylic acid (for example the dimethyl ester of terephthalic acid) with the poly(alkylene oxide) glycol and a molar excess of a diol, in the presence of a catalyst. The amount of the diol is at least 1.1 mole of diol per mole of acid.

The heating is continued until the removal of methanol is essentially complete.

The resulting prepolymer is then carried to high molecular weight by distillation of the excess of the low molecular weight diol (polycondensation). During this distillation, additional transesterification occurs, which leads to an increase in molecular weight and to a random arrangement of the various copolyester units in the molecule.

In order to avoid an excessively long hold time of the polymer at high temperatures with possible irreversible thermal degradation, catalysts for the ester interchange reaction are advantageously employed. While a wide variety of catalysts can be employed, organic titanates, such as, e.g., tetrabutyl titanate, either alone or in combination with magnesium or calcium acetates, are preferred. Complex titanates derived from alkali or alkaline earth metal alkoxides and esters of titanic acid are also very effective. Inorganic titanates, such as lanthanium titanate, mixtures of calcium acetate and antimony dioxide, and lithium and magnesium alkoxides are further examples of catalysts which can be used.

The ester interchange polymerizations are generally carried out in the molten state, but inert solvents can also be used to facilitate the removal of volatile components from the mass by operating at lower temperatures.

During the preparation of the elastomeric thermoplastic copolyether-ester it is common practice to add a stabilizer in order to prevent an oxidative degradation of the reagents and of the polymer during its formation. The known phenolic stabilizers can be used for this purpose.

The synergistic mixture of organo-phosphite having formula (I) and pentaerythritol phosphite (preferably of formula (III)) may be added to the copolyether-ester either during the polycondensation reaction, at the end of this reaction when the copolyester is again in the molten state, or after this reaction in a separate step by re-melting the copolyester in an extruder.

The synergistic mixture may be added in the form of a solid, a liquid in the molten state or in solution or dispersion in one or more of the reagents. It is generally suitable to add the synergistic mixture in the solid form to the finished copolyester by melt blending.

In this case, it is possible to prepare a master batch of the stabilizer, for example having a concentration of synergistic mixture of 20 - 40% by weight, and then to dilute this master batch with the pure copolyether-ester. This blending is preferably carried out in an extruder at a temperature of from 150 to 280°C, depending on the particular type of copolyether-ester. The extruder may be of the single-screw or double-screw type, preferably equipped with venting, or a Banbury mixer.

The copolyether-esters stabilized with the synergistic mixture employed in the present invention exhibit a high resistance the thermo-oxidation.

Owing to these peculiar properties, the stabilized copolyether-ester compositions of the present invention find use, e.g., in the production of hydraulic pipes, coatings for cables, elastic supports for bumpers, bellows for covering joints or couplings, composite gaskets or, generally, shaped articles to be used at high operating temperatures, generally higher than 120°C.

The characteristics of the copolyether-esters of the present invention may be further modified by the incorporation of various conventional inorganic fillers, such as, e.g., carbon black, silica gel, alumina, clay, fiberglass, etc. In general, the effect of these additives is to increase the modulus of the material, although at the expense of elongation, tear strength and abrasion resistance.

Besides the above, the product may be rendered flame-proof (UL 94 Class: V2, V0, etc.) by the addition of various flame-proofing systems containing aromatic halides, aliphatic halides or not containing halogen atoms, in amounts ranging from 5 to 45, particularly 15 to 45% by weight, based on the final product.

The following non-limitative examples are given for illustrative purposes only.

All parts, proportions and parameters given in the following are by weight, unless otherwise specified.

### EXAMPLES 1 to 5

Dimethyl-terephthalate, optionally isophthalic acid, 1,4-butane-diol and polytetra-(methylene)-glycol (PTMG) of different average molecular weights were charged, in the amounts listed in Table I, into an autoclave equipped with distillation column, variable-speed stirring means and temperature control system.

The temperature was gradually increased to 140 - 150°C over about 1 hour and 150 ppm of Ti(OBu)₄, previously dissolved in a few ml of butane-diol (about 10 - 20 ml), were added. After a short induction period, the transesterification reaction started; this reaction was evidenced by an increase in the column overhead temperature to about 65 - 70°C, which indicated the removal of methanol. The temperature of the reaction mass was gradually increased up to 205°C (over 2 hours) and was kept constant at this value until the methanol distillation was complete.

150 ppm of catalyst (tetrabutyl titanate) and about 4,000 ppm of phenolic stabilizer (Irganox® 1010, CIBA GEIGY) were added and vacuum was gradually applied until a residual pressure of about 6.7 Pa (0.05 mm Hg) was reached (within about 30 minutes) and heating was continued until an internal temperature of about 250°C was reached.

When the product had reached the desired melt index (about 10-25 g/10' at 230°C and 2.16 kg) the polymer was discharged by extrusion onto a water-cooled conveyor belt, and was chopped into small cubic granules.

The properties of the obtained copolyesters are listed in Table I.

**TABLE I**

| EXAMPLES | | | 1 | 2 | 3 | 4 | 5 |
|---|---|---|---|---|---|---|---|
| Monomers | Method | Units | | | | | |
| Dimethyl-terephthalate | | | 455 | 498 | 644 | 613 | 786 |
| Isophthalic acid | | | | | | 23 | |
| 1,4-butanediol | | | 212 | 244.6 | 353 | 224 | 396 |
| PTMG (molec. weight 250) | | | | | | 263 | 167 |
| PTMG (molec. weight 650) | | | | | | 117 | |
| PTMG (molec. weight 1,000) | | | 530 | 477.8 | 296 | - | |

| PROPERTIES | | | | | | | |
|---|---|---|---|---|---|---|---|
| · Melting point | D 2117 | °C | 182 | 191 | 209 | 160.5 | 198 |
| · Glass transition temperature | DIN 53445 | °C | -60 | -50 | -12 | -41 | +30 |
| · Melt Index at 230°C and 2.16 kg | D 1238 | g/10' | 20 | 18 | 18 | 21 | 13 |

### EXAMPLE 6

The elastomeric thermoplastic copolyether-ester of example 2 was mixed, at 200°C and in a double-screw extruder (MARIS M33) with 0.5% by weight of IRGAFOX 168®, 0.5% by weight of WESTON 618 ® and 0.5% by weight of a mixture of IRGAFOX 168 ® and WESTON 618 ^{R}, (weight ratio 1:1.5), respectively.

The thus stabilized products were injection molded at about 200°C and the tensile strength and the elongation at break properties were measured, according to ASTM D 638.

The obtained results are listed in the following Table II.

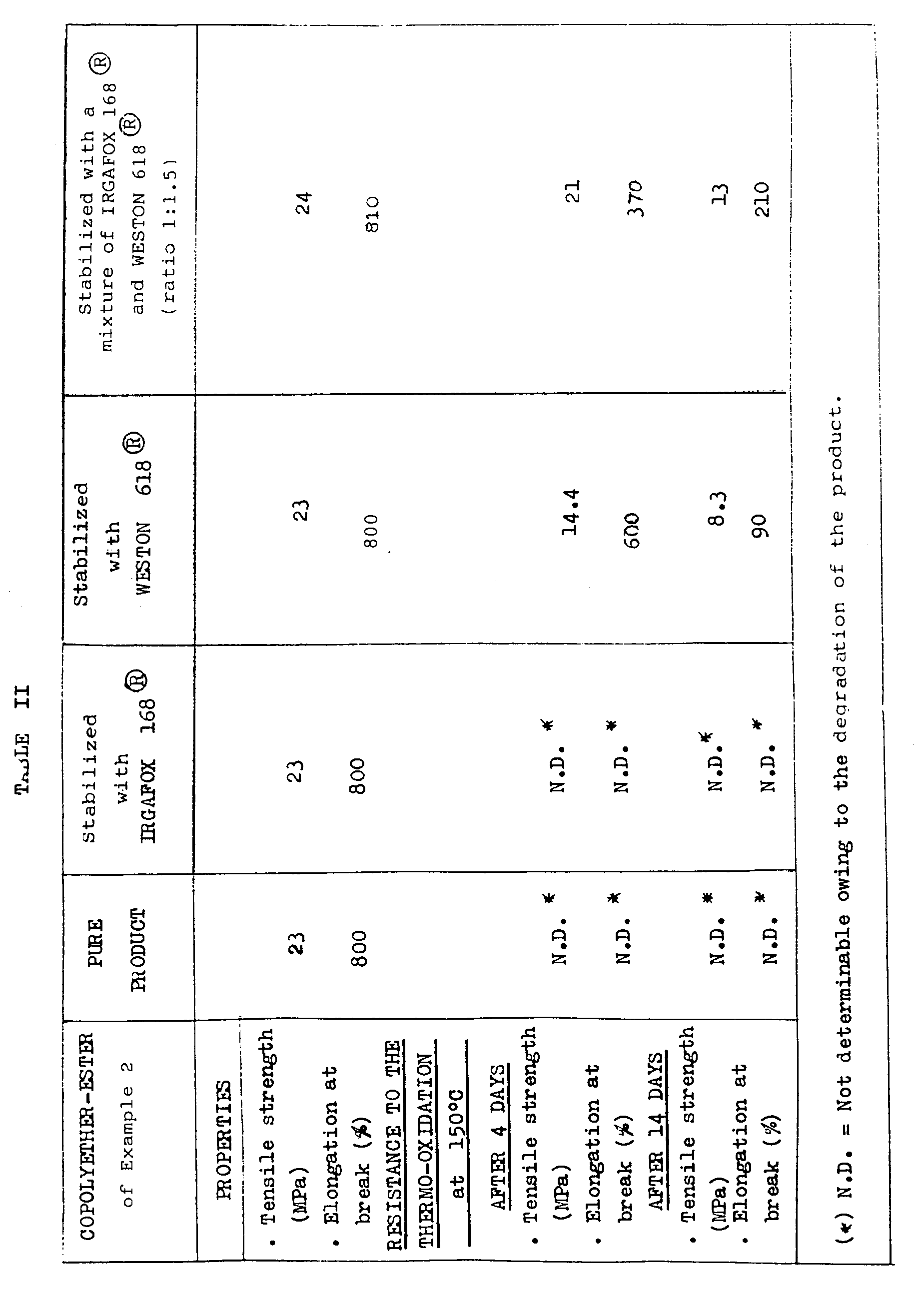

### EXAMPLES 7 to 10

By following the procedure of example 6, stabilized compositions composed of the copolyether-esters of examples 1, 3, 4 and 5 and 0.5% by weight of a mixture of IRGAFOX 168® and WESTON 618® (weight ratio 1:1.5) were prepared.

The properties of the stabilized compositions thus obtained are listed in the following Table III.

The tensile strength and the elongation were measured according to ASTM D 638.

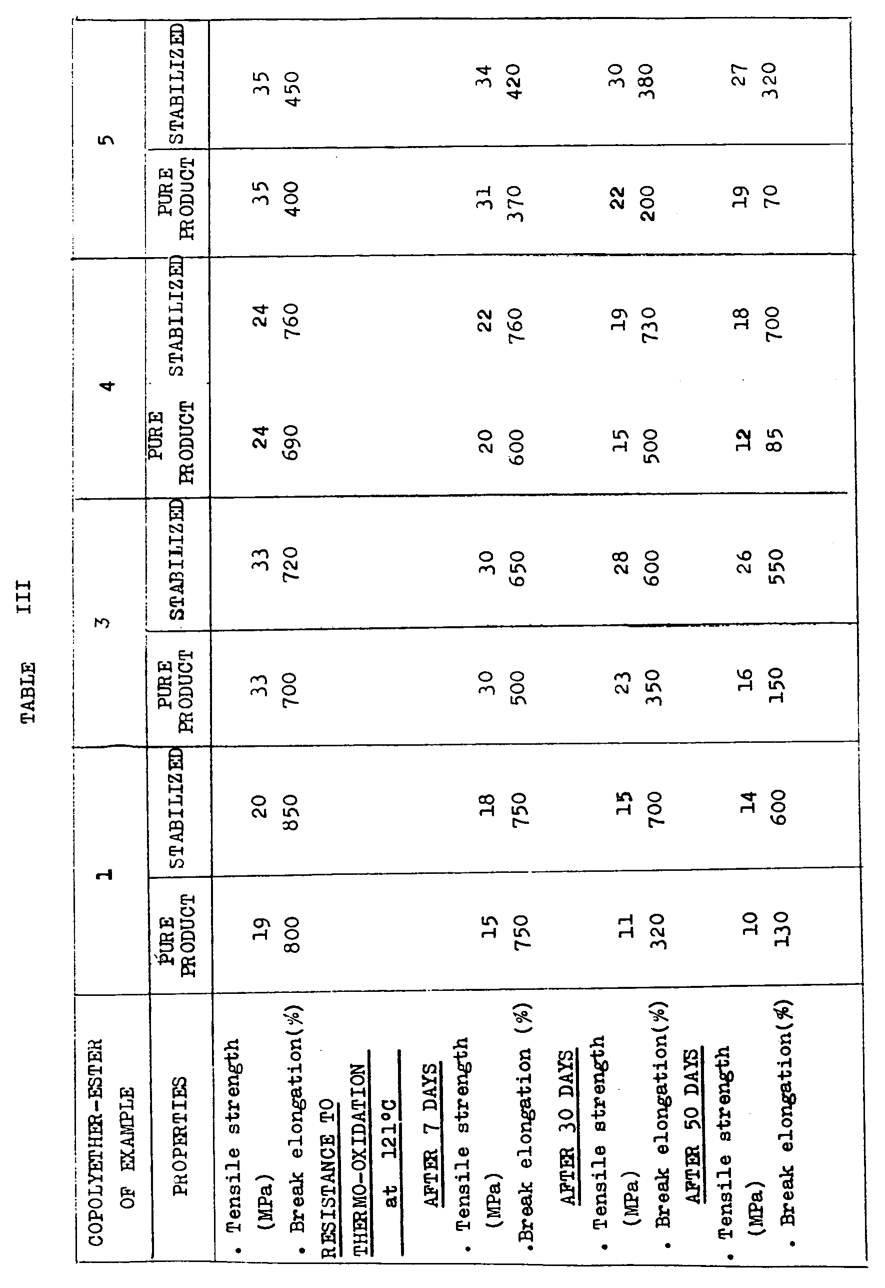

## Claims

1. Elastomeric thermoplastic copolyether-ester compositions having improved thermo-oxidation resistance, containing a stabilizer system composed of a mixture of a pentaerythritol phosphite and an organo-phosphite of the general formula (I): 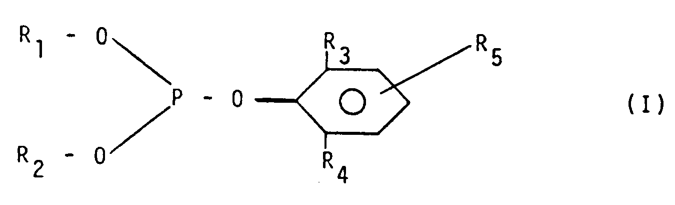 wherein:
R₁ and R₂, the same or different from each other, represent a C₁-C₆ alkyl group, a C₃-C₆ cyclo-alkyl group, a C₆-C₁₂ aryl group, an alkyl-aryl or an aryl-alkyl group containing from 7 to 15 carbon atoms; said groups being optionally substituted; and
R₃, R₄ and R₅, the same or different from each other, represent hydrogen, a C₁-C₆ alkyl group, a C₃-C₆ cyclo-alkyl group, an alkyl-aryl or an aryl-alkyl group containing from 7 to 16 carbon atoms, said groups being optionally substituted, with the proviso that at least one of R₃ and R₄ provides steric hindrance and preferably is a tert.butyl group.

2. Compositions according to claim 1, wherein each of R₁ and R₂ is a group of general formula (II): 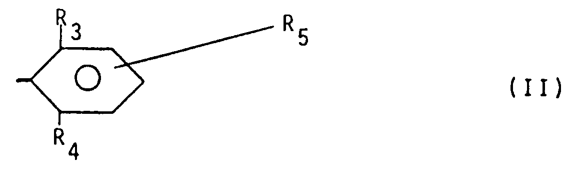 wherein R₃, R₄ and R₅ have the meanings given in claim 1.

3. Compositions according to any one of the preceding claims, wherein the organo-phosphite is tri(2,4-di-t-butyl-phenyl)phosphite.

4. Compositions according to any one of the preceding claims, wherein the pentaerythritol phosphite has the general formula (III): 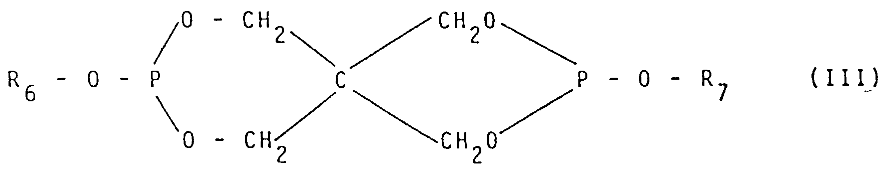 wherein R₆ and R₇, the same or different from each other, are selected from C₁-C₂₀ alkyl, aryl, aryloxy-ethyl, alkoxyethyl, aryloxyethoxyethyl, alkoxyethoxyethyl and alkoxy-poly-ethoxy-ethyl groups, each of these groups being optionally substituted by one or more halogen atoms such as Cl and F.

5. Compositions according to any one of the preceding claims, wherein the pentaerythritol phosphite is 3,9-di(octadecyloxy)2,4,8,10-tetraoxa-3,9-diphosphaspiro-[5,5]-undecane.

6. Compositions according to any one of the preceding claims, wherein the amount of stabilizer system ranges from 0.01 to 10% by weight with respect to the elastomeric copolyether-ester, and particularly from 0.2 to 5% by weight.

7. Compositions according to any one of the preceding claims, wherein the weight ratio of organo-phosphite to pentaerythritol-phosphite ranges from 1:2 to 2:1 and particularly is about 1:1.5.

8. Compositions according to any one of the preceding claims, wherein said copolyether-ester consists of long-chain ester units and short-chain ester units linked to each other in head-to-tail fashion through ester bonds; the long-chain ester units being represented by general formula (IV): 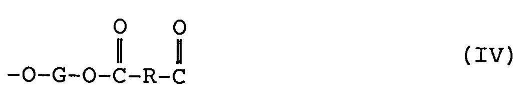 and the short-chain units being represented by general formula (V): 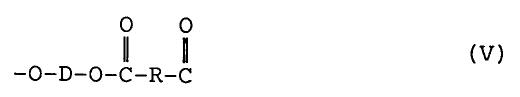 wherein:
G is a divalent group remaining after the removal of the terminal hydroxy groups from a poly-(alkylene oxide)-glycol having an average molecular weight of from about 250 to about 6,000 and a carbon/oxygen ratio of about 1.8 to 4.3;
R is a divalent group remaining after the removal of the carboxy groups from a dicarboxylic acid having a molecular weight lower than about 300; and
D is a divalent group remaining after the removal of the hydroxy groups from a diol having a molecular weight lower than about 250;
and wherein the short-chain ester groups of formula (V) are present in an amount of about 15 to 95% by weight, and particularly 33 to 86% by weight, with respect to the weight of the copolyester, the remaining part being composed of long-chain ester units of formula (IV).

9. Compositions according to any one of the preceding claims, additionally containing from 5 to 45% by weight of a flame-proofing agent selected from aromatic halides, aliphatic halides and synergistic flame-proofing systems not containing halogen atoms.

## Patentansprüche

1. Elastomere thermoplastische Copolyetherester-Zusammensetzungen mit verbesserter Thermooxidationsbeständigkeit, enthaltend ein Stabilisatorsystem, das zusammengesetzt ist aus einer Mischung eines Pentaerythritphosphits und eines Organophosphits der allgemeinen Formel (I): 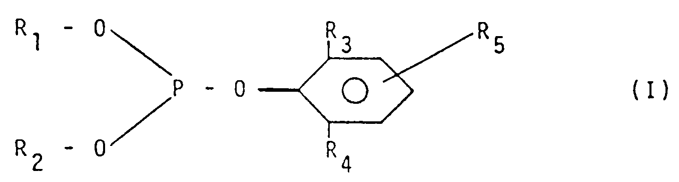 worin:
R₁ und R₂, gleich oder verschieden voneinander, eine C₁-C₆-Alkylgruppe, eine C₃-C₆-Cycloalkylgruppe, eine C₆-C₁₂-Arylgruppe, ein Alkylaryl oder eine Arylalkylgruppe, die 7 bis 15 Kohlenstoffatome enthält, darstellen; wobei diese Gruppen gegebenenfalls substituiert sind; und
R₃, R₄ und R₅, gleich oder verschieden voneinander, Wasserstoff, eine C₁-C₆-Alkylgruppe, eine C₃-C₆-Cycloalkylgruppe, eine Alkylaryl-oder eine Arylalkylgruppe, die 7 bis 16 Kohlenstoffatome enthält, darstellen, wobei diese Gruppen gegebenenfalls substituiert sind, mit der Maßgabe, daß mindestens eines von R₃ und R₄ eine sterische Hinderung liefert und vorzugsweise eine tert.-Butylgruppe ist.

2. Zusammensetzungen nach Anspruch 1, in denen R₁ und R₂ jeweils eine Gruppe der allgemeinen Formel (II) bedeuten: 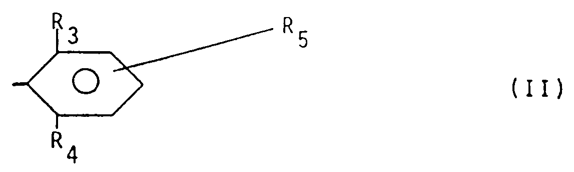 worin R₃, R₄ und R₅ die in Anspruch 1 angegebenen Bedeutungen aufweisen.

3. Zusammensetzungen nach irgendeinem der vorangehenden Ansprüche, in denen das Organophosphit Tri(2,4-di-t-butylphenyl)phosphit ist.

4. Zusammensetzungen nach irgendeinem der vorangehenden Ansprüche, in welchen das Pentaerythritphosphit die allgemeine Formel (III) aufweist: 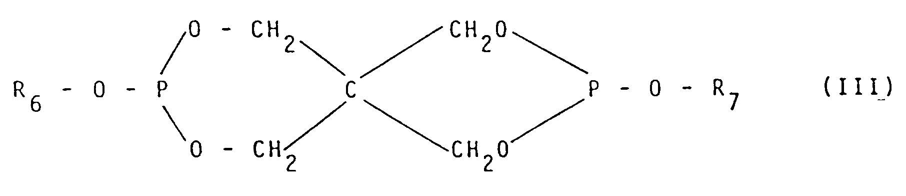 worin R₆ und R₇, gleich oder verschieden voneinander, aus C₁-C₂₀-Alkyl-, Aryl-, Aryloxyethyl-, Alkoxyethyl-, Aryloxyethoxyethyl-, Alkoxyethoxyethyl- und Alkoxypolyethoxyethyl-Gruppen ausgewählt sind, wobei jede dieser Gruppen gegebenenfalls mit einem oder mehreren Halogenatomen wie beispielsweise Cl und F substituiert ist.

5. Zusammensetzungen nach irgendeinem der vorangehenden Ansprüche, in welchen das Pentaerythritphosphit 3,9-Di(octadecyloxy)-2,4,8,10-tetraoxa-3,9-diphosphaspiro[5.5]undecan ist.

6. Zusammensetzungen nach irgendeinem der vorangehenden Ansprüche, in denen die Menge an Stabilisatorsystem im Bereich von 0,01 bis 10 Gew.-%, bezogen auf den elastomeren Copolyetherester, und insbesondere von 0,2 bis 5 Gew.-%, liegt.

7. Zusammensetzungen nach irgendeinem der vorangehenden Ansprüche, in denen das Gew.-Verhältnis von Organophosphit zu Pentaerythritphosphit im Bereich von 1:2 bis 2:1 liegt und insbesondere etwa 1:1,5 beträgt.

8. Zusammensetzungen nach irgendeinem der vorangehenden Ansprüche, in welchen der Copolyetherester aus langkettigen Estereinheiten und kurzkettigen Estereinheiten besteht, die in Kopf-an-Schwanz-Manier über Esterbindungen aneinander gebunden sind, wobei die langkettigen Estereinheiten durch die allgemeine Formel (IV): 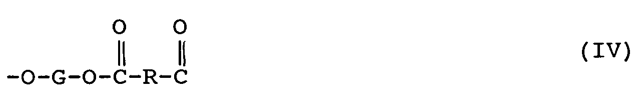 dargestellt werden und die kurzkettigen Estereinheiten durch die allgemeine Formel (V): 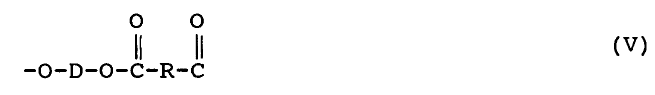 dargestellt werden, worin:
G eine zweiwertige Gruppe ist, die nach der Entfernung der endständigen Hydroxygruppen aus einem Poly(alkylenoxid)glykol mit einem durchschnittlichen Molekulargewicht von etwa 250 bis etwa 6000 und einem Kohlenstoff/Sauerstoff-Verhältnis von etwa 1,8 bis 4,3 verbleibt;
R eine zweiwertige Gruppe ist, die nach der Entfernung der Carboxygruppen aus einer Dicarbonsäure mit einem Molekulargewicht unter etwa 300 verbleibt; und
D eine zweiwertige Gruppe ist, die nach der Entfernung der Hydroxygruppen aus einem Diol mit einem Molekulargewicht unter 250 verbleibt;
und worin die kurzkettigen Estergruppen der Formel (V) in einer Menge von etwa 15 bis 95 Gew.-% und insbesondere 33 bis 86 Gew.-% bezogen auf das Gewicht des Copolyesters vorhanden sind, wobei der verbleibende Teil aus langkettigen Estereinheiten der Formel (IV) zusammengesetzt ist.

9. Zusammensetzungen nach irgendeinem der vorangehenden Ansprüche, zusätzlich 5 bis 45 Gew.-% eines Flammschutzmittels enthaltend, das aus aromatischen Halogeniden, aliphatischen Halogeniden und synergistischen Flammschutzsystemen, die keine Halogenatome enthalten, ausgewählt ist.

## Revendications

1. Compositions élastomères thermoplastiques d'un copolymère de type poly(éther ester) présentant une résistance améliorée à la thermo-oxydation, contenant un système de stabilisateur constitué d'un mélange d'un phosphite de pentaérythrol et d'un phosphite organique de formule générale (I) : 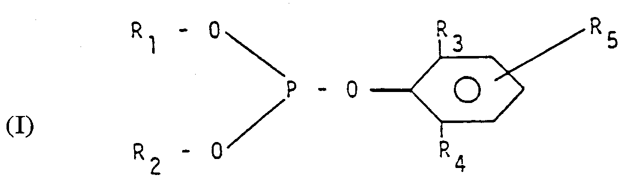 dans lequel
R₁ et R₂, identiques ou différents l'un de l'autre, représentent un groupe alkyle en C₁₋₆, un groupe cycloalkyle en C₃₋₆, un groupe aryle en C₆₋₁₂, un groupe alkylaryle ou arylalkyle comportant de 7 à 15 atomes de carbone, lesdits groupes pouvant être substitués, et
R₃, R₄ et R₅, identiques ou différents l'un de l'autre, représentent un atome d'hydrogène, un groupe alkyle en C₁₋₆, un groupe cycloalkyle en C₃₋₆, un groupe alkylaryle ou arylalkyle contenant de 7 à 16 atomes de carbone, lesdits groupes pouvant être substitués, à condition qu'au moins un des résidus R₃ et R₄ présente un certain encombrement stérique et est de préférence un groupe *t*-butyle.

2. Compositions conformes à la revendication 1 dans lesquelles chaque R₁ et R₂ représente un groupe de formule générale (II) : 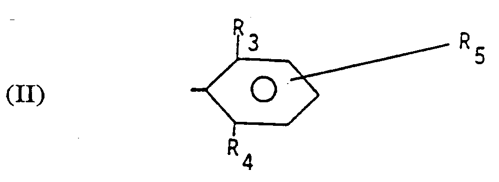 dans laquelle R₃, R₄ et R₅ ont la même signification que celle donnée dans la revendication 1.

3. Compositions conformes à une quelconque des revendications précédentes, dans lesquelles le phosphite organique est le phosphite de tris-(2,4-di-*t*-butylphényle).

4. Compositions conformes à une quelconque des revendications précédentes, dans lesquelles le phosphite de pentaérythrol répond à la formule générale (III) : 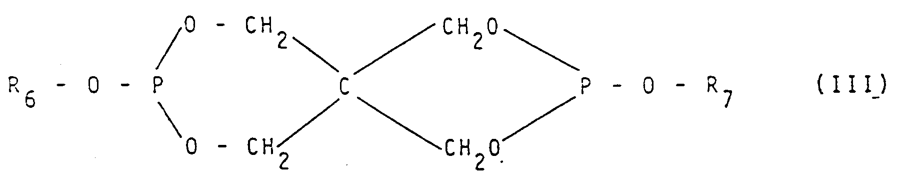 dans laquelle R₆ et R₇, identiques ou différents l'un de l'autre, sont choisis parmi les groupes alkyle en C₁₋₂₀, aryle, aryloxyéthyle, alcoxyéthyle, aryloxyéthoxyéthyle, alcoxyéthoxyéthyle et alcoxy-polyéthoxyéthyle, chacun de ces groupes pouvant être substitués par un ou plusieurs atomes d'halogène, tels que le chlore ou le fluor.

5. Compositions conformes à une quelconque des revendications précédentes, dans lesquelles le phosphite de pentaérythrol est le 3,9-di-(octadécyloxy)-2,4,8,10-tétraoxa-3,9-diphospha-spiro[5,5]-undécane.

6. Compositions conformes à une quelconque des revendications précédentes, dans lesquelles la quantité du système stabilisateur varie entre 0,01 et 10 % en poids par rapport au poly(éther ester) élastomère, et en particulier entre 0,2 et 5 % en poids.

7. Compositions conformes à une quelconque des revendications précédentes, dans lesquelles le rapport en poids du phosphite organique au phosphite de pentaérythrol est compris entre 1/2 et 2/1 et vaut en particulier environ 1/1,5.

8. Compositions conformes à une quelconque des revendications précédentes, dans lesquelles ledit copolymère de type poly(éther ester) est constitué de motifs ester à longue chaîne et de motifs ester à courte chaîne liés entre eux par un enchaînement tête-à-queue de liaisons ester, les motifs ester à longue chaîne étant représentés par la formule générale (IV) : 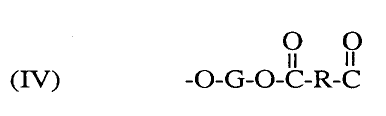 et les motifs ester à courte chaîne étant représentés par la formule générale (V) : 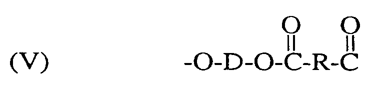 dans lesquelles
G représente un groupe divalent restant après l'élimination des groupes hydroxyle terminaux d'un poly(oxyde d'alkylène)-glycol ayant une masse moléculaire moyenne comprise entre environ 250 et environ 6 000 et un rapport carbone/oxygène d'environ 1,8 à 4,3,
R représente un groupe divalent restant après l'élimination des groupes carboxy d'un acide dicarboxylique ayant une masse moléculaire inférieure à environ 300, et
D représente un groupe divalent restant après élimination des groupes hydroxyle d'un diol ayant une masse moléculaire moyenne inférieure à environ 250;
et dans lesquelles les groupes ester à courte chaîne de formule (V) sont présents à raison d'environ 15 à 95 % en poids, et en particulier de 33 à 86 % en poids, par rapport au poids du copolyester, la partie complémentaire étant constituée de motifs ester à longue chaîne de formule (IV).

9. Compositions conformes à une quelconque des revendications précédentes, contenant en outre de 5 à 45 % en poids d'un agent ignifugeant choisi parmi les halogénures aromatiques, les halogénures aliphatiques et des systèmes ignifugeants synérgiques qui ne contiennent pas d'atomes d'halogène.
